**Europäisches Patentamt**

**European Patent Office**

**Office européen des brevets**

(11) Veröffentlichungsnummer : **0 298 397 B1**

(12) **EUROPÄISCHE PATENTSCHRIFT**

(45) Veröffentlichungstag der Patentschrift :
**24.04.91 Patentblatt 91/17**

(51) Int. Cl.⁵ : **B60K 17/34, B60K 23/08**

(21) Anmeldenummer : **88110574.6**

(22) Anmeldetag : **01.07.88**

(54) Antriebsanordnung für ein Kraftfahrzeug.

(30) Priorität : **04.07.87 DE 3722205**

(43) Veröffentlichungstag der Anmeldung :
**11.01.89 Patentblatt 89/02**

(45) Bekanntmachung des Hinweises auf die
Patenterteilung :
**24.04.91 Patentblatt 91/17**

(84) Benannte Vertragsstaaten :
**DE ES FR GB IT SE**

(56) Entgegenhaltungen :
**EP-A- 0 186 123**

(56) Entgegenhaltungen :
**EP-A- 0 226 666**
**DE-A- 3 626 025**
**DE-A- 3 631 180**
**DE-C- 3 507 490**
**DE-C- 3 516 982**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Martin, Harry
Kramerstrasse 9
W-8027 Neuried (DE)**

**Beschreibung**

Die Erfindung betrifft eine Antriebsanordnung für ein Kraftfahrzeug mit einer vorderen und einer hinteren jeweils über ein Achsausgleichgetriebe permanent angetriebenen Achse und einem die Achsausgleichgetriebe über eine vordere und eine hintere Abtriebswelle antreibenden Zwischenachsausgleichgetriebe, dem eine Zwischenachsausgleichgetriebesperre zugeordnet ist und das im ungesperrten Zustand eine bestimmte, konstruktiv vorgegebene Antriebsdrehmomentverteilung zwischen der Vorderachse und der Hinterachse bewirkt.

Bei Kraftfahrzeugen, insbesondere bei Personenkraftwagen werden in zunehmendem Maße Antriebsanordnungen verwendet, bei denen die Vorderachse und die Hinterachse permanent angetrieben werden, um eine möglichst gute Antriebstraktion zu gewährleisten. Abhängig von der Gewichtsverteilung des einzelnen Kraftfahrzeuges wird eine bestimmte Antriebsdrehmomentverteilung zwischen der Vorderachse und der Hinterachse des Kraftfahrzeuges gewählt. Diese gewählte Antriebsdrehmomentverteilung kann nur für einen bestimmten Belastungszustand des Kraftfahrzeuges im Hinblick auf eine maximale Antriebstraktion optimal sein. Eine solchermaßen gewählte Antriebsdrehmomentverteilung kann aber insbesondere bei belastetem Kraftfahrzeug zu einer unerwünschten Fahrdynamik führen. So ist es mit einem Kraftfahrzeug, bei dem die Vorderachse und die Hinterachse entsprechend einer vorgegebenen Antriebsdrehmomentverteilung permanent angetrieben werden, in der Regel nicht möglich, durch gezieltes Übersteuern des Kraftfahrzeuges durch enge Kurven zu "driften".

Eine Antriebsanordnung, die dies ermöglicht, ist bereits aus der DE-C-35 16 982 bekannt. Bei der dort beschriebenen Antriebsanordnung ist die Verteilung des Antriebsdrehmomentes auf die Vorderachse und auf die Hinterachse abhängig vom Lenkwinkel der Vorderräder derart veränderbar, daß der Anteil des Antriebsdrehmoments auf die Vorderachse beim Durchfahren von Kurven im Extremfall auf 15% abnimmt und der Anteil des Antriebsdrehmoments auf die Hinterachse entsprechend auf maximal 85% zunimmt. Die Veränderbarkeit der Antriebsdrehmomentverteilung wird bei der bekannten Antriebsanordnung dadurch erreicht, daß dem Zwischenachsausgleichgetriebe eine selbstsperrende Zwischenachsausgleichgetriebesperre in Form einer Flüssigkeitsscherreibungskupplung zugeordnet ist und daß im Antriebsstrang zu den Vorderrädern eine steuerbare Reibungskupplung vorgesehen ist. Diese bekannte Antriebsanordnung hat aber eine Reihe von Nachteilen : Da der Sperrgrad der verwendeten selbstsperrenden Zwischenachsausgleichgetriebesperre eine Funktion der Drehzahldifferenz zwischen der vorderen und der hinteren Abtriebswelle des Zwischenachsausgleichgetriebes ist, baut diese selbstsperrende Zwischenachsausgleichgetriebesperre aufgrund der unterschiedlichen Raddurchmesser der einzelnen Kraftfahrzeugräder und aufgrund des unterschiedlichen Schlupfes bei asymmetrischer Grundverteilung stets ein Sperrmoment auf, das zu einer Verspannung zwischen den beiden Antriebsachsen führt. Diese Verspannung führt zu einer unstetigen Antriebsdrehmomentverteilung auf die beiden Antriebsachsen und beeinträchtigt damit durch den ständigen Wechsel zwischen Unter- und Übersteuertendenz die Fahrdynamik des Kraftfahrzeuges. Die Verspannung der beiden Antriebsachsen beeinträchtigt ferner die Regelgüte eines im Kraftfahrzeug eingesetzten Antiblockiersystems. Darüber hinaus führt diese Verspannung der beiden Antriebsachsen zu einem unerwünschten Wirkungsgradverlust. Ein weiterer Nachteil der bekannten Antriebsanordnung ist, daß die als Zwischenachsausgleichsgetriebesperre verwendete Flüssigkeitsscherreibungskupplung bei häufigem und länger andauerndem Verändern der Antriebsdrehmomentverteilung zwischen der Vorderachse und der Hinterachse überbeansprucht wird. Diese bekannte Antriebsanordnung ist darüber hinaus konstruktiv sehr aufwendig, da neben der selbstsperrenden Zwischenachsausgleichsgetriebesperre zusätzlich noch eine steuerbare Reibungskupplung im Antriebsstrang zu den Vorderrädern erforderlich ist.

Es ist daher Aufgabe der Erfindung, eine standfeste, konstruktiv einfache Antriebsanordnung eingangs genannter Art anzugeben, die eine optimale Fahrdynamik des Kraftfahrzeuges bei optimalem Wirkungsgrad gewährleistet.

Diese Aufgabe wird erfindungsgemäß dadurch gelöst, daß die Achsausgleichgetriebeübersetzungen und/oder die Zwischenachsausgleichsgetriebeübersetzung und/oder das Verhältnis der Reifengrößen der Vorder- und Hinterräder des Kraftfahrzeuges derart festgelegt sind, daß sich bei ungesperrtem Zwischenachsausgleichgetriebe zwischen dessen vorderer und dessen hinterer Abtriebswelle im normalen, weitgehend schlupffreien Fahrbetrieb des Kraftfahrzeuges eine kleine, definierte Drehzahldifferenz einstellt, und daß die Zwischenachsausgleichsgetriebesperre mittels einer Steuereinheit hinsichtlich ihres Sperrgrades steuerbar ist.

Mit der erfindungsgemäßen Antriebsanordnung ist es zur Erzielung einer optimalen Fahrdynamik des Kraftfahrzeuges möglich, durch Betätigen der Zwischenachsausgleichsgetriebesperre durch die Steuereinheit die Antriebsdrehmomentverteilung zwischen der Vorderachse und der Hinterachse des Kraftfahrzeuges zu verändern. Sind beispielsweise die Achsausgleichgetriebeübersetzungen und/oder die Zwischenachsausgleichgetriebeübersetzung und/oder das Verhältnis der Reifengrößen der Vorder- und Hinterräder des Kraftfahrzeuges derart festgelegt, daß im normalen, weitgehend schlupffreien Fahrbetrieb des Kraftfahrzeuges die Drehzahl der vorderen Abtriebswelle des ungesperrten Zwischenachsausgleichsgetriebes kleiner ist als die Drehzahl dessen hinteren Abtriebswelle, dann kann durch eine kontinuierliche Erhöhung des Sperrgrades der Zwischenachsausgleichsgetriebesperre durch die Steuereinheit der Anteil des auf die Vorderachse übertragenen Antriebsdrehmomentes erhöht und gleichzeitig der Anteil des auf die Hinterachse übertragenen Antriebsdrehmomentes verringert werden. Auf diese Weise kann ein verstärkter Vorderradantrieb erzeugt werden, wodurch das Fahrverhalten des Kraftfahrzeuges in Richtung untersteuernd beeinflußt wird.

Sind dagegen die Achsausgleichsgetriebeübersetzungen und/oder die Zwischenachsausgleichgetriebeübersetzung und/oder das Verhältnis der Reifengrößen der Vorder- und Hinterräder des Kraftfahrzeuges derart festgelegt, daß im normalen, weitgehend schlupffreien Fahrbetrieb des Kraftfahrzeuges die Drehzahl der vorderen Abtriebswelle des ungesperrten Zwischenachsausgleichsgetriebes größer ist als die Drehzahl dessen hinteren Abtriebswelle, so kann durch eine Erhöhung des Sperrgrades der Zwischenachsausgleichsgetriebesperre aufgrund einer entsprechenden Ansteuerung durch die Steuereinheit die Antriebsdrehmomentverteilung zwischen der Vorderachse und der Hinterachse derart verändert werden, daß mit zunehmender Erhöhung des Sperrgrades der Zwischenachsausgleichsgetriebesperre der Anteil des auf die Vorderachse übertragenen Antriebsdrehmomentes kontinuierlich abnimmt und der auf die Hinterachse übertragene Anteil des Antriebsdrehmomentes entsprechend kontinuierlich zunimmt.

Die erfindungsgemäße Antriebsanordnung zeichnet sich gegenüber der bekannten Antriebsanordnung insbesondere durch ihren einfacheren konstruktiven Aufbau aus, da sie zur Veränderung der Drehmomentverteilung im Unterschied zur bekannten Antriebsanordnung, bei der eine Flüssigkeitsscherreibungskupplung und eine steuerbare Reibungskupplung verwendet wird, nur eine einzige steuerbare Kupplung als Zwischenachsausgleichsgetriebesperre benötigt. Da diese Zwischenachsausgleichsgetriebesperre nur dann angesteuert wird, wenn durch einen Sperrmomentaufbau eine Änderung der Antriebsdrehmomentverteilung zwischen der Vorderachse und der Hinterachse vorgenommen werden soll und ansonsten vollständig außer Betrieb ist, ergibt sich im Unterschied zur bekannten Antriebsanordnung, bei der die selbstsperrende Flüssigkeitsscherreibungskupplung aufgrund von unterschiedlichen Raddurchmessern und aufgrund von unterschiedlichem Schlupf bei asymmetrischer Grundverteilung permanent wirksam ist, ein deutlich besserer Wirkungsgrad. Ferner wird aufgrund der vollständigen Entkopplung der Antriebsachsen im normalen Fahrbetrieb die Regelgüte eines etwa im Fahrzeug eingebauten Antiblockiersystems nicht beeinträchtigt.

Für den Fall, daß im normalen, weitgehend schlupffreien Fahrbetrieb des Kraftfahrzeuges die Drehzahl der vorderen Abtriebswelle (36) des Zwischenachsausgleichsgetriebes (12) in dessen ungesperrtem Zustand größer ist als die Drehzahl der hinteren Abtriebswelle (48) des Zwischenachsausgleichsgetriebes (12) wird nach einer vorteilhaften Weiterbildung der Erfindung der Sperrgrad der Zwischenachsausgleichsgetriebesperre (30) angehoben, wenn aufgrund von an den Hinterrädern des Kraftfahrzeuges auftretendem Schlupf die Drehzahl der hinteren Abtriebswelle (48) des Zwischenachsausgleichsgetriebes (12) die Drehzahl der vorderen Abtriebswelle (36) des Zwischenachsausgleichsgetriebes (12) erreicht bzw. überschreitet. Auf diese Weise wird im Vergleich zur konstruktiv vorgegebenen Antriebsdrehmomentverteilung zwischen der Vorderachse und der Hinterachse ein größerer Drehmomentanteil auf die Vorderachse übertragen wenn der Schlupf an den Hinterrädern die Konstruktiv vorgegebene Drehzahldifferenz zwischen der vorderen und der hinteren Abtriebswelle des Zwischenachsausgleichsgetriebes in dessen ungesperrtem Zustand überschreitet. Vorzugsweise werden die Achsausgleichsgetriebeübersetzungen und/oder die Zwischenachsausgleichsgetriebeübersetzung und-/oder das Verhältnis der Reifengrößen der Vorder- und Hinterräder des Kraftfahrzeuges derart gewählt, daß die Drehzahldifferenz zwischen vorderer und hinterer Abtriebswelle des Zwischenachsausgleichsgetriebes zwischen 1,5% und 3%, vorzugsweise 2% der Drehzahl der vorderen bzw. der hinteren Abtriebswelle beträgt.

Die Drehzahldifferenz soll aufgrund der zu berücksichtigenden Reifentoleranzen und des Verschleißes nicht zu klein und andererseits aber auch nicht größer als unbedingt erforderlich sein.

Vorteilhaft wird als Zwischenachsausgleichsgetriebesperre eine steuerbare Trockenreibungs- oder Naßreibungslamellenkupplung und als Steuereinheit eine elektronische Steuereinheit, beispielsweise ein Mikrocomputer verwendet.

Nach einer Weiterbildung der Erfindung nimmt die Steuereinheit die Steuerung des Sperrgrades der Zwischenachsausgleichsgetriebesperre in Abhängigkeit vom Lenkwinkel des Kraftfahrzeuges vor. Um ein gezieltes Übersteuern eines Kraftfahrzeuges mit permanentem Allradantrieb zu ermöglichen, wird bei im normalen Fahrbetrieb des Kraftfahrzeuges gegenüber der Drehzahl der hinteren Abtriebswelle größeren Drehzahl der vorderen Abtriebswelle des Zwischenachsausgleichsgetriebes der Sperrgrad der Zwischenachsausgleichsgetriebesperre mit zunehmendem Lenkwinkel des Kraftfahrzeuges kontinuierlich angehoben.

Nach einer weiteren Ausbildung der Erfindung nimmt die Steuereinheit die Steuerung des Sperrgrades der Zwischenachsausgleichsgetriebesperre in Abhängigkeit von der von der Brennkraftmaschine des Kraftfahrzeuges jeweils abgegebenen Antriebsleistung vor. Um die Antriebsleistung der Brennkraftmaschine insbesondere bei Kurvenfahrt des Kraftfahrzeuges möglichst gut auf den Boden übertragen zu können, wird bei im normalen Fahrbetrieb des Kraftfahrzeuges gegenüber der Drehzahl der hinteren Abtriebswelle größeren Drehzahl der vorderen Abtriebswelle des Zwischenachsausgleichsgetriebes der Sperrgrad der Zwischenachsausgleichsgetriebesperre mit zunehmender von der Brennkraftmaschine des Kraftfahrzeuges jeweils abgegebenen Antriebsleistung verringert, wodurch mit zunehmender Antriebsleistung der Brennkraftmaschine der der Vorderachse des Kraftfahrzeuges zugeführte Anteil des Antriebsdrehmomentes zunimmt und dadurch die Übersteuertendenz abnimmt. Auf diese Weise wird eine von der Gewichtsverteilung des Kraftfahrzeuges und von der dynamischen Achslastverteilung abhängige, im Sinne einer optimalen Drehmomentübertragung auf die Antriebsräder des Kraftfahrzeuges günstige Antriebsdrehmomentverteilung zwischen der Vorderachse und der Hinterachse des Kraftfahrzeuges erreicht. Die von der Brennkraftmaschine des Kraftfahrzeuges jeweils abgegebene Antriebsleistung wird dabei in einfacher Weise durch die Steuereinheit aufgrund der erfaßten Brennkraftmaschinendrehzahl, des erfaßten Saugrohrunterdrucks und der erfaßten Drosselklappen- bzw. Gaspedalstellung bestimmt.

Nach einer weiteren Ausbildung der Erfindung nimmt die Steuereinheit die Steuerung des Sperrgrades der Zwischenachsausgleichsgetriebesperre in Abhängigkeit von der Fahrgeschwindigkeit des Kraftfahrzeuges vor. Um ein insbesondere im hohen Fahrgeschwindigkeitsbereich des Kraftfahrzeuges gewünschtes untersteuerndes Fahrverhalten zu erreichen, wird bei im normalen Fahrbetrieb des Kraftfahrzeuges gegenüber der Drehzahl der hinteren Abtriebswelle größeren Drehzahl der vorderen Abtriebswelle des Zwischenachsausgleichsgetriebes insbesondere bei Kurvenfahrt des Kraftfahrzeuges der Sperrgrad der Zwischenachsausgleichsgetriebesperre mit zunehmender Fahrgeschwindigkeit des Kraftfahrzeuges verringert, wodurch der der Vorderachse zugeführte Anteil des Antriebsdrehmomentes zunimmt und entsprechend der der Hinterachse zugeführte Anteil des Antriebsdrehmomentes abnimmt. Die Fahrgeschwindigkeit des Kraftfahrzeuges wird dabei von der Steuereinheit aufgrund der erfaßten Raddrehzahlen des Kraftfahrzeuges ermittelt.

Um eine Verspannung des Antriebsstranges im Rangierbetrieb des Kraftfahrzeuges zu verhindern, wird nach einer Weiterbildung der Erfindung der Sperrgrad der Zwischenachsausgleichsgetriebesperre auf seinen minimalen Wert verringert, wenn die Fahrgeschwindigkeit des Kraftfahrzeuges einen vorgegebenen Grenzwert, beispielsweise 10 km/h unterschreitet.

Nach einer anderen Ausbildung der Erfindung hebt die Steuereinheit den Sperrgrad der Zwischenachsausgleichsgetriebesperre auf den maximalen Wert an, wenn gleichzeitig die ermittelte Fahrgeschwindigkeit des Kraftfahrzeuges null, die Kraftfahrzeugbremse betätigt, die Brennkraftmaschinendrehzahl gleich der Leerlaufdrehzahl, die Drosselklappen- bzw. Gaspedalstellung gleich der Leerlaufstellung, kein bzw. der erste Gang des Geschwindigkeitswechselgetriebes des Kraftfahrzeuges eingelegt und die Kraftfahrzeugkupplung ausgerückt ist, und verringert die Steuereinheit den Sperrgrad der Zwischenachsausgleichsgetriebesperre auf den minimalen Wert, wenn gleichzeitig die ermittelte Fahrgeschwindigkeit des Kraftfahrzeuges größer null ist, die Drosselklappen- bzw. Gaspedalstellung von der Leerlaufstellung abweicht, die Brennkraftmaschinendrehzahl größer als die Leerlaufdrehzahl ist und die Kraftfahrzeugkupplung eingerückt wird. Bei dieser Weiterbildung der Erfindung wird durch das Sperren der Zwischenachsausgleichsgetriebesperre aufgrund der Drehzahldifferenz zwischen der vorderen und der hinteren Abtriebswelle des Zwischenachsausgleichsgetriebes eine Verspannung der beiden Antriebsachsen hervorgerufen, die als Rückrollbremse wirkt und damit ein rückrollfreies Anfahren des Kraftfahrzeuges am Berg ermöglicht, ohne daß die Handbremse dazu betätigt werden muß.

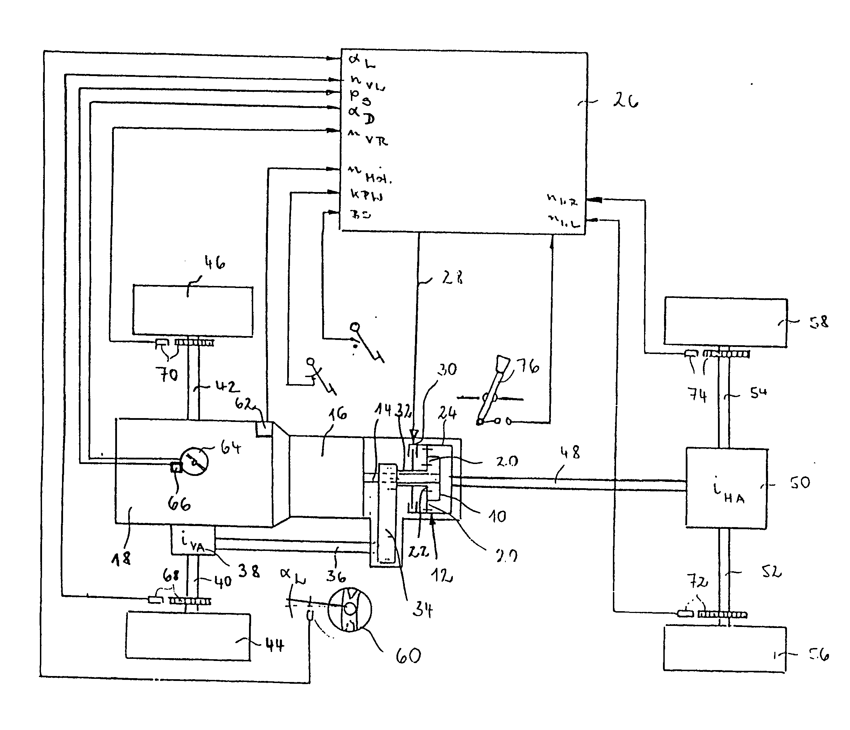

Im folgenden wird ein Ausführungsbeispiel der Erfindung anhand der einzigen Figur beschrieben.

Bei der in der Figur dargestellten Antriebsanordnung wird der Planetenradträger 10 eines Zwischenachsausgleichsgetriebes 12 über die Antriebswelle 14 und ein Geschwindigkeitswechselgetriebe 16 von einer Brennkraftmaschine 18 angetrieben. Durch die Planetenräder 20 werden das Zentralrad 22 und das äußere Hohlrad 24 des Zwischenachsausgleichsgetriebes 12 angetrieben. Zur Sperrung des Zwischenachsausgleichsgetriebes 12 können das Zentralrad 22 und das äußere Hohlrad 24 des Zwischenachsausgleichsgetriebes 12 durch eine von einer Steuereinheit 26 über eine Steuerleitung 28 gesteuerte Zwischenachsausgleichsgetriebesperre 30 drehfest miteinander verbunden werden. Das Zentralrad 22 treibt über eine Hohlwelle 32 und über eine drehfeste Verbindung 34 die vordere Abtriebswelle 36 des Zwischenachsausgleichsgetriebes 12 an. Diese vordere Abtriebswelle 36 treibt über ein vorderes Achsausgleichsgetriebe 38 und über vordere Gelenkwellen 40 und 42 die Vorderräder 44 und 46 eines mit der dargestellten Antriebsanordnung ausgerüsteten Kraftfahrzeuges an. Das äußere Hohlrad 24 des Zwischenachsausgleichsgetriebes 12 treibt über dessen hintere Abtriebswelle 48, über das hintere Achsausgleichsgetriebe 50 und über die hinteren Gelenkwellen 52 und 54 die Hinterräder 56 und 58 des Kraftfahrzeuges an.

Wesentliche Merkmale der in der Figur dargestellten Antriebsanordnung sind einerseits, daß die Achsausgleichsgetriebeübersetzungen $i_{VA}$ und $i_{HA}$ und/oder die Zwischenachsausgleichsgetriebeübersetzung und/oder das Verhältnis der Reifengrößen zwischen den Vorderrädern 44 und 46 und den Hinterrädern 56 und 58 des Kraftfahrzeuges derart festgelegt sind, daß sich bei ungesperrtem Zwischenachsausgleichsgetriebe 12 zwischen dessen vorderer Abtriebswelle 36 und dessen hinterer Abtriebswelle 48 im normalen, weitgehend schlupffreien Fahrbetrieb des Kraftfahrzeuges eine kleine definierte Drehzahldifferenz einstellt, und andererseits, daß die Zwischenachsausgleichsgetriebesperre 30 durch die elektronische Steuereinheit 26, die durch einen Mikrocomputer gebildet sein kann, hinsichtlich ihres Sperrgrades steuerbar ist. Bei der in der Figur dargestellten Antriebsanordnung soll im normalen, weitgehend schlupffreien Fahrbetrieb des Kraftfahrzeuges die Drehzahl der vorderen Abtriebswelle 36 des ungesperrten Zwischenachsausgleichsgetriebes 12 größer sein als die Drehzahl der hinteren Abtriebswelle 48 des Zwischenachsausgleichsgetriebes 12. Die Drehzahldifferenz soll dabei vorzugsweise 2% der Drehzahl der vorderen Abtriebswelle 36 bzw. der hinteren Abtriebswelle 48 betragen.

Bei der dargestellten Antriebsanordnung soll die Steuerung des Sperrgrades der Zwischenachsausgleichsgetriebesperre 30 in Abhängigkeit vom Lenkwinkel $\alpha_L$ des Kraftfahrzeuges derart erfolgen, daß der Sperrgrad der Zwischenachsausgleichsgetriebesperre 30 mit zunehmendem Lenkwinkel $\alpha_L$ kontinuierlich angehoben wird. Dies hat zur Folge, daß mit zunehmendem Lenkwinkel $\alpha_L$ der Anteil des Antriebsdrehmoments auf die Vorderräder 44 und 46 beim Durchfahren von Kurven abnimmt und der Anteil des Antriebsdrehmoments auf die Hinterräder 56 und 58 zunimmt. Auf diese Weise ist ein gezieltes Übersteuern des Kraftfahrzeuges in Kurven möglich. Wenn am Kurvenausgang der Lenkwinkel $\alpha_L$ wieder gegen null geht (Geradeausfahrt), wird mit abnehmendem Lenkwinkel $\alpha_L$ der Sperrgrad der Zwischenachsausgleichsgetriebesperre 30 wieder kontinuierlich auf den Wert null verringert. Dies bedeutet, daß sich bei Geradeausfahrt des Kraftfahrzeuges wieder die konstruktiv vorgegebene Antriebsdrehmomentverteilung zwischen den Vorderrädern 44 und 46 und den Hinterrädern 56 und 58 einstellt. Der Lenkwinkel $\alpha_L$ wird durch einen Lenkwinkelsensor 60 erfaßt. Dieser kann beispielsweise bei Verwendung einer in der Figur nicht dargestellten Zahnstangenlenkung an derem Gehäuse angeordnet sein und die Stellung der im Gehäuse verschiebbaren Zahnstange abtasten und daraus ein den eingestellten Lenkwinkel $\alpha_L$ anzeigendes Lenkwinkelsignal liefern, das der elektronischen Steuereinheit 26 zugeführt wird.

Neben dem Lenkwinkel $\alpha_L$ stellt die jeweilige von der Brennkraftmaschine 18 abgegebene Antriebsleistung eine Kenngröße für die Steuerung des Sperrgrades der Zwischenachsausgleichsgetriebesperre 30 dar. Bei der in der Figur dargestellten Antriebsanordnung soll insbesondere bei Kurvenfahrt des Kraftfahrzeuges der Sperrgrad der Zwischenachsausgleichsgetriebesperre 30 mit zunehmender von der Brennkraftmaschine 18 des Kraftfahrzeuges jeweils abgegebenen Antriebsleistung verringert werden. Damit wird erreicht, daß mit zunehmender von Brennkraftmaschine 18 abgegebenen Antriebsleistung beim Durchfahren von Kurven der auf die Vorderräder 44 und 46 übertragene Anteil des Antriebsdrehmoments zunimmt. Es wird dadurch ein verstärker Vorderradantrieb erreicht, der das Fahrverhalten des Kraftfahrzeuges in Richtung "untersteuernd" beeinflußt. Die von der Brennkraftmaschine 18 jeweils abgegebene Antriebsleistung wird von der Steuereinheit 26 errechnet. Als Parameter dafür erhält die Steuereinheit 26 die von einem Drehzahlaufnehmer 62 erfaßte Brennkraftmaschinendrehzahl $n_{Mot}$, den von einem Drosselklappenwinkelsensor 64 aufgeommenen Drosselklappenwinkel $\alpha_D$ und den von einem im Saugrohr der Brennkraftmaschine 18 angeordneten Drucksensor 66 erfaßten Saugrohrunterdruck $p_S$.

Schließlich stellt die Fahrgeschwindigkeit des Kraftfahrzeuges noch eine dritte Kenngröße für die Steuerung des Sperrgrades der Zwischenachsausgleichsgetriebsperre 30 dar. Bei der in der Figur dargestellten Antriebsanordnung wird der Sperrgrad der Zwischenachsausgleichsgetriebesperre 30 insbesondere bei Kurvenfahrt des Kraftfahrzeuges mit zunehmender Fahrgeschwindigkeit des Kraftfahrzeuges verringert. Dies bedeutet, daß sich mit zunehmender Fahrgeschwindigkeit des Kraftfahrzeuges in Kurvenfahrt die konstruktiv vorgegebene Antriebsdrehmomentverteilung zwischen den Vorderrädern 44 und 46 und den Hinterrädern 56 und 58 einstellt, wodurch das Fahrverhalten des Kraftfahrzeuges in Kurven mit zunehmender Fahrgeschwindigkeit in Richtung "neutral" bzw. "untersteuernd" beeinflußt wird. Die Fahrgeschwindigkeit des Kraftfahrzeuges wird von der Steuereinheit 26 aufgrund der über die Drehzahlaufnehmer 68, 70, 72 und 74 erfaßten Raddrehzahlen $n_{VL}$, $n_{VR}$, $n_{HL}$ und $n_{HR}$ berechnet.

Um eine Verspannung des Antriebsstranges im Rangierbetrieb des Kraftfahrzeuges zu verhindern, wird der Sperrgrad der Zwischenachsausgleichsgetriebsperre 30 auf seinen minimalen Wert verringert, wenn die Fahrgeschwindigkeit des Kraftfahrzeuges einen vorgegebenen Grenzwert, beispielsweise 10 km/h unterschreitet.

Wie vorstehend dargelegt, dient die dargestellte Antriebsanordnung zur Veränderung der Antriebsdrehmomentverteilung zwischen den Vorderrädern 44 und 46 und den Hinterrädern 56 und 58 in Abhängigkeit der Kenngrößen Lenkwinkel $\alpha_L$, Antriebsleistung der Brennkraftmaschine 18 und Fahrgeschwindigkeit des Kraftfahrzeuges. Die dargestellte Antriebsanordnung dient darüber hinaus auch als Rückrollbremse beim Anfahren des Kraftfahrzeuges am Berg. Damit eine solche Rückrollbremse von der Steuereinheit 26 automatisch aktiviert bzw. deaktiviert werden kann, muß zu den bereits erfaßten Kenngrößen zusätzlich noch der Kupplungspedalweg KPW, die Betätigung der Bremse (BS) und die Stellung des Schalthebels 76 des Geschwindigkeitswechselgetriebes 16 erfaßt werden. Die Rückrollbremse wird aktiviert, d.h. der Sperrgrad der Zwischenachsausgleichsgetriebesperre 30 wird auf den maximalen Wert angehoben, wenn gleichzeitig die über die Raddrehzahlen $n_{VL}$, $n_{VR}$, $n_{HL}$ und $n_{HR}$ ermittelte Fahrgeschwindigkeit des Kraftfahrzeuges null, die Kraftfahrzeugbremse betätigt, die Brennkraftmaschinendrehzahl $n_{Mot}$ gleich der Leerlaufdrehzahl, der Drosselklappenwinkel $\alpha_D$ gleich dem Drosselklappenwinkel im Leerlauf der Brennkraftmaschine 18, kein bzw. der erste Gang des Geschwindigkeitswechselgetriebes 16 des Kraftfahrzeuges eingelegt und die Kraftfahrzeugkupplung ausgerückt ist. Beim Anfahren des Kraftfahrzeuges wird die Rückrollbremse wieder deaktiviert, d.h. der Sperrgrad der Zwischenachsausgleichsgetriebesperre 30 wird auf den minimalen Wert verringert. Dies erfolgt, wenn gleichzeitig die ermittelte Fahrgeschwindigkeit des Kraftfahrzeuges größer null ist, der Drosselklappenwinkel $\alpha_D$ von dem Drosselklappenwinkel im Leerlauf der Brennkraftmaschine 18 abweicht, die Brennkraftmaschinendrehzahl $n_{mot}$ größer als die Leerlaufdrehzahl ist und die Kraftfahrzeugkupplung eingerückt wird. Durch die vorstehend genannten Parameter kann sowohl das Anhalten des Kraftfahrzeuges als auch der Anfahrvorgang des Kraftfahrzeuges eindeutig identifiziert werden, so daß die Steuerung der Zwischenachsausgleichsgetriebesperre 30 von der Steuereinheit 26 automatisch erfolgen kann. Diese Rückrollbremse beruht auf dem Grundgedanken, daß sich die Vorderräder 44 und 46 gegenüber den Hinterrädern 56 und 58 aufgrund der zwischen vorderer Abtriebswelle 36 und hinterer Abtriebswelle 48 des Zwischenachsausgleichsgetriebes 12 gewählten Drehzahldifferenz verspannen, wenn die Zwischenachsausgleichsgetriebesperre 30 betätigt ist.

## Ansprüche

1. Antriebsanordnung für ein Kraftfahrzeug mit einer vorderen und einer hinteren jeweils über ein Achsausgleichgetriebe permanent angetriebenen Achse und einem die Achsausgleichgetriebe über eine vordere und eine hintere Abtriebswelle antreibenden Zwischenachsausgleichsgetriebe, dem eine Zwischenachsausgleichsgetriebesperre zugeordnet ist und das im ungesperrten Zustand eine bestimmte, konstruktiv vorgegebene Antriebsdrehmomentverteilung zwischen der Vorderachse und der Hinterachse bewirkt, dadurch gekennzeichnet, daß die Achsausgleichgetriebeübersetzungen ($i_{VA}$, $i_{HA}$) und/oder die Zwischenachsausgleichsgetriebeübersetzung und/oder das Verhältnis der Reifengrößen der Vorder- und Hinterräder (44, 46, 56, 58) des Kraftfahrzeuges derart festgelegt sind, daß sich bei ungesperrtem Zwischenachsausgleichsgetriebe (12) zwischen dessen vorderer und dessen hinterer Abtriebswelle (36, 48) im normalen, weitgehend schlupffreien Fahrbetrieb des Kraftfahrzeuges eine kleine, definierte Drehzahldifferenz einstellt, und daß die Zwischenachsausgleichsgetriebesperre (30) mittels einer Steuereinheit (26) hinsichtlich ihres Sperrgrades steuerbar ist.

2. Antriebsanordnung nach Anspruch 1, dadurch gekennzeichnet, daß im normalen, weitgehend schlupffreien Fahrbetrieb des Kraftfahrzeuges die Drehzahl der vorderen Abtriebswelle (36) des ungesperrten Zwischenachsausgleichsgetriebes (12) größer ist als die Drehzahl dessen hinteren Abtriebswelle (48).

3. Antriebsanordnung nach Anspruch 2, dadurch gekennzeichnet, daß der Sperrgrad der Zwischenachsausgleichsgetriebesperre (30) angehoben wird, wenn aufgrund von an den Hinterrädern des Kraftfahrzeuges auftretenden Schlupf die Drehzahl der hinteren Abtriebswelle (48) des Zwischenachsausgleichsgetriebes (12) die Drehzahl der vorderen Abtriebswelle (36) des Zwischenachsausgleichsgetriebes (12) erreicht bzw. überschreitet.

4. Antriebsanordnung nach einem der vorhergehenden Ansprüche, dadurch gekennzeichnet, daß die Drehzahldifferenz zwischen der vorderen und der hinteren Abtriebswelle (36,48) des Zwischenachsausgleichsgetriebes (12) zwischen 1,5% und 3%, vorzugsweise 2% der Drehzahl der vorderen bzw. der hinteren Abtriebswelle (36,48) beträgt.

5. Antriebsanordnung nach einem der vorhergehenden Ansprüche, dadurch gekennzeichnet, daß die Zwischenachsausgleichsgetriebesperre (30) eine steuerbare Trockenreibungs- oder Naßreibungslamellenkupplung ist.

6. Antriebsanordnung nach einem der vorhergehenden Ansprüche, dadurch gekennzeichnet, daß die Steuereinheit (26) eine elektronische Steuereinheit, insbesondere ein Mikrocomputer ist.

7. Antriebsanordnung nach einem der vorhergehenden Ansprüche, dadurch gekennzeichnet, daß die Steuereinheit (26) die Steuerung des Sperrgrades der Zwischenachsausgleichsgetriebesperre (30) in

Abhängigkeit vom Lenkwinkel ($\alpha_L$) vornimmt.

8. Antriebsanordnung nach Anspruch 7, dadurch gekennzeichnet, daß bei im normalen Fahrbetrieb des Kraftfahrzeuges gegenüber der Drehzahl der hinteren Abtriebswelle (48) größeren Drehzahl der vorderen Abtriebswelle (36) des Zwischenachsausgleichsgetriebes (12) der Sperrgrad der Zwischenachsausgleichsgetriebesperre (30) mit zunehmendem Lenkwinkel ($\alpha_L$) kontinuierlich angehoben wird.

9. Antriebsanordnung nach einem der vorhergehenden Ansprüche, dadurch gekennzeichnet, daß die Steuereinheit (26) die Steuerung des Sperrgrades der Zwischenachsausgleichsgetriebesperre (30) in Abhängigkeit von der von der Brennkraftmaschine (18) des Kraftfahrzeuges jeweils abgegebenen Antriebsleistung vornimmt.

10. Antriebsanordnung nach Anspruch 9, dadurch gekennzeichnet, daß bei im normalen Fahrbetrieb des Kraftfahrzeuges gegenüber der Drehzahl der hinteren Abtriebswelle (48) größeren Drehzahl der vorderen Abtriebswelle (36) des Zwischenachsausgleichsgetriebes (12) insbesondere bei Kurvenfahrt des Kraftfahrzeuges der Sperrgrad der Zwischenachsausgleichsgetriebesperre (30) mit zunehmender von der Brennkraftmaschine (18) des Kraftfahrzeuges jeweils abgegebenen Antriebsleistung verringert wird.

11. Antriebsanordnung nach Anspruch 9 oder 10, dadurch gekennzeichnet, daß die von der Brennkraftmaschine (18) des Kraftfahrzeuges jeweils abgegebene Antriebsleistung aufgrund der erfaßten Brennkraftmaschinendrehzahl ($n_{Mot.}$), des erfaßten Saugrohrunterdrucks ($p_S$) und der erfaßten Drosselklappen- bzw. Gaspedalstellung ($\alpha_D$) bestimmt wird.

12. Antriebsanordnung nach einem der vorhergehenden Ansprüche, dadurch gekennzeichnet, daß die Steuereinheit (26) die Steuerung des Sperrgrades der Zwischenachsausgleichsgetriebesperre (30) in Abhängigkeit von der Fahrgeschwindigkeit des Kraftfahrzeuges vornimmt.

13. Antriebsanordnung nach Anspruch 12, dadurch gekennzeichnet, daß bei im normalen Fahrbetrieb des Kraftfahrzeuges gegenüber der Drehzahl der hinteren Abtriebswelle (28) größeren Drehzahl der vorderen Abtriebswelle (36) des Zwischenachsausgleichsgetriebes (12) insbesondere bei Kurvenfahrt des Kraftfahrzeuges der Sperrgrad der Zwischenachsausgleichsgetriebesperre (30) mit zunehmender Fahrgeschwindigkeit des Kraftfahrzeuges verringert wird.

14. Antriebsanordnung nach Anspruch 12 oder 13, dadurch gekennzeichnet, daß der Sperrgrad der Zwischenachsausgleichsgetriebesperre (30) auf seinen minimalen Wert verringert wird, wenn die Fahrgeschwindigkeit des Kraftfahrzeuges einen vorgegebenen Grenzwert unterschreitet.

15. Antriebsanordnung nach Anspruch 14, dadurch gekennzeichnet, daß der Grenzwert gleich der im Rahmen des Rangierbetriebs des Kraftfahrzeuges maximal zu erreichenden Rangiergeschwindigkeit vorgegeben wird.

16. Antriebsanordnung nach Anspruch 15, dadurch gekennzeichnet, daß die maximale Rangiergeschwindigkeit etwa 10 km/h beträgt.

17. Antriebsanordnung nach einem der Ansprüche 12 bis 16, dadurch gekennzeichnet, daß die Fahrgeschwindigkeit des Kraftfahrzeuges aufgrund der erfaßten Raddrehzahlen ($n_{VL}$, $n_{VR}$, $n_{HL}$, $n_{HR}$) des Kraftfahrzeuges ermittelt wird.

18. Antriebsanordnung nach einem der vorhergehenden Ansprüche, dadurch gekennzeichnet, daß die Steuereinheit (26) den Sperrgrad der Zwischenachsausgleichsgetriebesperre (30) auf den maximalen Wert anhebt, wenn gleichzeitig die ermittelte Fahrgeschwindigkeit des Kraftfahrzeuges null, die Kraftfahrzeugbremse betätigt, die Brennkraftmaschinendrehzahl ($n_{Mot}$) gleich der Leerlaufdrehzahl, die Drosselklappen- bzw. Gaspedalstellung ($\alpha_D$) gleich der Leerlaufstellung, kein bzw. der erste Gang des Geschwindigkeitswechselgetriebes (16) des Kraftfahrzeuges eingelegt und die Kraftfahrzeugkupplung ausgerückt ist und daß die Steuereinheit (26) den Sperrgrad der Zwischenachsausgleichsgetriebesperre (30) auf den minimalen Wert verringert, wenn gleichzeitig die ermittelte Fahrgeschwindigkeit des Kraftfahrzeuges größer null ist, die Drosselklappen- bzw. Gaspedalstellung ($\alpha_D$) von der Leerlaufstellung abweicht, die Brennkraftmaschinendrehzahl ($n_{Mot}$) größer als die Leerlaufdrehzahl ist und die Kraftfahrzeugkupplung eingerückt wird.

## Claims

1. A drive arrangement for a motor vehicle having a front and a rear axle each driven permanently through a differential axle gear and an intermediate differential axle gear driving the differential axle gears through a front and a rear drive-output shaft, with which intermediate differential axle gear there is associated an intermediate differential axle gear lock, and which in the unlocked condition effects a specific drive torque distribution, predetermined by design, between the front axle and the rear axle, characterised in that the differential axle gear transmission ratios ($i_{VA}$, $i_{HA}$) and/or the intermediate differential axle gear transmission ratio and/or the ratio of the tyre sizes of the front and rear wheels (44, 46, 56, 58) of the motor vehicle are fixed in such a way that when the intermediate differential axle gear (12) is unlocked a small, defined difference of rotation rate is established between its front and its rear drive-output shafts (36, 48) in the normal, largely slip-free driving operation of the motor vehicle, and in that the intermediate differential axle gear lock (30) is controllable, as regards its degree of locking, by means of a control unit (26).

2. A drive arrangement according to Claim 1, characterised in that in normal, largely slip-free driving operation of the motor vehicle the rotation rate of the front drive-output shaft (36) of the unlocked intermediate differential axle gear (12) is greater than the rotation rate of its rear drive-output shaft (48).

3. A drive arrangement according to Claim 2, characterised in that the degree of locking of the intermediate differential axle gear (30) is raised when by reason of slip occurring on the rear wheels of the motor vehicle the rotation rate of the rear drive-output shaft (48) of the intermediate differential axle gear (12) reaches or exceeds the rotation rate of the front drive-output shaft (36) of the intermediate differential axle gear (12).

4. A drive arrangement according to any one of the preceding Claims, characterised in that the rotation rate difference between the front and rear drive-output shafts (36, 48) of the intermediate differential axle gear (12) amounts to between 1.5% and 3%, preferably 2%,of the rotation rate of the front or rear drive-output shaft (36, 48).

5. A drive arrangement according to any one of the preceding Claims, characterised in that the intermediate differential axle gear lock (30) is a controllable dry-friction or wet-friction plate-type clutch.

6. A drive arrangement according to any one of the preceding Claims, characterised in that the control unit (26) is an electronic control unit, especially a microcomputer.

7. A drive arrangement according to any one of the preceding Claims, characterised in that the control unit (26) carries out the controlling of the degree of locking of the intermediate differential axle gear lock (30) in dependence upon the steering angle ($\alpha_L$).

8. A drive arrangement according to Claim 7, characterised in that in the case of a rotation rate of the front drive-output shaft (36) of the intermediate differential axle gear (12) greater than the rotation rate of the rear drive-output shaft (48) in normal driving operation of the motor vehicle, the degree of locking of the intermediate differential axle gear lock (30) is raised continuously with increasing steering angle ($\alpha_L$).

9. A drive arrangement according to any one of the preceding Claims, characterised in that the control unit (26) effects the controlling of the degree of locking of the intermediate differential axle gear lock (30) in dependence upon the drive power delivered from time to time by the internal combustion engine (18) of the motor vehicle.

10. 4 drive arrangement according to Claim 9, characterised in that when in normal driving operation of the motor vehicle the rotation rate of the front drive-output shaft (36) of the intermediate differential axle gear (12) is greater than the rotation rate of the rear drive-output shaft (48), especially when the motor vehicle is travelling on a bend, the degree of locking of the intermediate differential axle gear lock (30) is reduced with increasing drive power delivered from time to time by the internal combustion engine (18) of the motor vehicle.

11. A drive arrangement according to any one of Claims 9 or 10, characterised in that the drive power delivered from time to time by the internal combustion engine (18) of the motor vehicle is determined on the basis of the detected internal combustion engine rotation rate ($n_{Mot.}$) of the detected intake pipe suction ($p_s$) and of the detected throttle valve or accelerator pedal position ($\alpha_D$).

12. A drive arrangement according to any one of the preceding Claims, characterised in that the control unit (26) effects the controlling of the degree of locking of the intermediate differential axle gear lock (30) in dependence upon the driving speed of the motor vehicle.

13. A drive arrangement according to Claim 12, characterised in that when the rotation rate of the front drive-output shaft (36) of the intermediate differential axle gear (12) is greater than the rotation rate of the rear drive-output shaft (48) in normal driving operation of the motor vehicle, especially when the motor vehicle is travelling on a bend, the degree of locking of the intermediate differential axle gear (30) is reduced with increasing driving speed of the motor vehicle.

14. A drive arrangement according to either one of Claims 12 or 13, characterised in that the degree of locking of the intermediate differential axle gear lock (30) is reduced to its minimum value when the driving speed of the motor vehicle falls short of a predetermined limit value.

15. A drive arrangement according to Claim 14, characterised in that the limit value is pre-determined as equal to the maximum manoeuvring speed achievable within the scope of manoeuvring of the motor vehicle.

16. A drive arrangement according to Claim 15, characterised in that the maximum manoeuvring speed amounts to about 10 k.p.h.

17. A drive arrangement according to any one of Claims 12 to 16, characterised in that the driving speed of the motor vehicle is ascertained on the basis of the detected wheel rotation rates ($n_{VL}$, $n_{VR}$, $n_{HL}$, $n_{HR}$) of the motor vehicle.

18. A drive arrangement according to any one of the preceding Claims, characterised in that the control unit (26) raises the degree of locking of the intermediate differential axle gear lock (30) to the maximum value when at the same time the ascertained driving speed of the motor vehicle is zero, the motor vehicle brake is actuated, the internal combustion engine rotation rate ($n_{Mot}$) is equal to the idling rotation rate, the throttle valve position or accelerator

pedal position ($\alpha_D$) is equal to the idling position, no gear or the first gear of the change-speed gear (16) of the motor vehicle is engaged and the motor vehicle clutch is disengaged, and in that the control unit (26) reduces the degree of locking of the intermediate differential axle gear lock (30) to the minimum value, when at the same time the ascertained driving speed of the motor vehicle is greater than zero, the throttle valve position or accelerator pedal position ($\alpha_D$) differs from the idling position, the internal combustion engine rotation rate ($n_{Mot}$) is greater than the idling rotation rate and the motor vehicle clutch is engaged.

## Revendications

1. Disposition d'entraînement pour un véhicule automobile comprenant un essieu avant et un essieu arrière, respectivement entraînés de manière permanente au moyen d'un engrenage différentiel d'essieu, et un engrenage différentiel d'essieu intermédiaire entraînant le différentiel d'essieu au moyen d'un arbre de sortie avant et d'un arbre de sortie arrière, auquel est adjoint un blocage d'engrenage différentiel d'essieu, ce qui produit à l'état non bloqué une répartition déterminée du couple d'entraînement fixée par construction entre l'essieu avant et l'essieu arrière, caractérisée en ce que les rapports de transmission des différentiels d'essieu ($i_{VA}$, $i_{HA}$) et/ou le rapport de transmission du différentiel intermédiaire et/ou le rapport des dimensions des pneus des roues avant et arrière (44, 46, 56, 58) du véhicule sont fixés de manière telle que le différentiel intermédiaire (12) n'étant pas bloqué, il s'établit entre ses arbres de sortie (36, 48) avant et arrière, en service normal de marche du véhicule, largement dépourvu de glissement, une petite différence définie de vitesse de rotation et en ce que le blocage de différentiel intermédiaire (30) peut être contrôlé, quant à sont degré de blocage, au moyen d'une unité de commande (26).

2. Disposition d'entraînement selon la revendication 1, caractérisée en ce qu'en service de marche normal du véhicule largement dépourvu de glissement, la vitesse de rotation de l'arbre de sortie (36) avant du différentiel intermédiaire (12) non bloqué est supérieure à la vitesse de rotation de son arbre de sortie (48) arrière.

3. Disposition d'entraînement selon la revendication 2, caractérisée en ce que le degré de blocage du blocage du différentiel intermédiaire (30) est augmenté lorsqu'en raison du glissement se produisant sur les roues arrière du véhicule, la vitesse de rotation de l'arbre de sortie arrière (48) du différentiel intermédiaire (12) atteint ou dépasse la vitesse de rotation de l'arbre de sortie (36) avant du différentiel intermédiaire (12).

4. Disposition d'entraînement selon l'une des revendications qui précèdent, caractérisée en ce que la différence de vitesse de rotation des arbres de sortie avant et arrière (36, 48) de l'engrenage démultiplicateur intermédiaire est comprise entre 1,5% et 3%, de préférence 2%, de la vitesse de rotation des arbres de sortie avant et arrière (36, 48).

5. Disposition d'entraînement selon l'une des revendications qui précèdent, caractérisée en ce que le blocage de différentiel intermédiaire (30) est un embrayage à disques à friction à sec ou à friction humide pouvant être commandé.

6. Disposition d'entraînement selon l'une des revendications qui précèdent, caractérisée en ce que l'unité de commande (26) est une commande électronique, en particulier un micro-ordinateur.

7. Disposition d'entraînement selon l'une des revendications qui précèdent, caractérisée en ce que l'unité de commande (26) assume la commande du degré de blocage du blocage du différentiel intermédiaire (30) en fonction de l'angle de braquage ($\alpha_D$).

8. Disposition d'entraînement selon la revendication 7, caractérisée en ce que le véhicule étant en service de marche normal et la vitesse de rotation de l'arbre de sortie (36) avant du différentiel intermédiaire étant supérieure à la vitesse de rotation de l'arbre de sortie (48) arrière, le degré de blocage du blocage du différentiel intermédiaire (30) est continuellement augmenté lorsque l'angle de braquage $\alpha_L$ augmente.

9. Disposition d'entraînement selon l'une des revendications qui précèdent, caractérisée en ce que l'unité de commande (26) assume la commande du degré de blocage du blocage du différentiel intermédiaire (30) en fonction de la puissance d'entraînement fournie par le moteur à combustion interne (18) du véhicule.

10. Disposition d'entraînement selon la revendication 9, caractérisée en ce que le véhicule étant en service normal et la vitesse de rotation de l'arbre de sortie (36) avant du différentiel intermédiaire (12) étant de préférence à la vitesse de rotation de l'arbre de sortie (48) arrière, en particulier lorsque le véhicule parcourt des virages, le degré de blocage du blocage du différentiel intermédiaire (30) est réduit lorsqu'augmente la puissance d'entraînement fournie par le moteur (18) du véhicule.

11. Disposition d'entraînement selon la revendication 9 ou 10, caractérisée en ce que la puissance d'entraînement fournie par le moteur (18) du véhicule est déterminée d'après la vitesse de rotation relevée pour le moteur ($n_{Mot}$), la dépression relevée dans la tubulure d'aspiration (PS) et la position relevée pour le papillon des gaz ou la pédale d'accélérateur ($\alpha_D$).

12. Disposition d'entraînement selon l'une des revendications qui précèdent, caractérisée en ce que l'unité de commande (26) assume la commande du degré de blocage du blocage du différentiel intermédiaire (30) en fonction de la vitesse de marche du véhicule

13. Disposition d'entraînement selon la revendication 12, caractérisée en ce que le véhicule étant en service de marche normal et la vitesse de rotation de l'arbre de sortie avant (36) du différentiel intermédiaire (12) étant supérieure à la vitesse de rotation de l'arbre de sortie arrière (48), en particulier lorsque le véhicule parcourt des virages, le degré de blocage du blocage de différentiel intermédiaire (30) est réduit lorsqu'augmente la vitesse de marche du véhicule.

14. Disposition d'entraînement selon la revendication 12 ou 13, caractérisée en ce que le degré de blocage du blocage du différentiel intermédiaire (30) est réduite à sa valeur minimale, lorsque la vitesse de marche du véhicule descend en-dessous d'une valeur limite déterminée.

15. Disposition d'entraînement selon la revendication 14, caractérisée en ce que la valeur limite est fixée égale à la vitesse maximale de manoeuvre à atteindre dans le cadre du service de manoeuvre du véhicule.

16. Disposition d'entraînement selon la revendication 15, caractérisée en ce que la vitesse maximale de manoeuvre est d'environ 10 km/h.

17. Disposition d'entraînement selon l'une des revendications 12 à 16, caractérisée en ce que la vitesse de marche du véhicule est déterminée d'après les vitesses de rotation des roues ($n_{VL}$, $n_{VR}$, $n_{HL}$, $n_{HR}$) du véhicule relevées.

18. Disposition selon l'une des revendications qui précédent, caractérisée en ce que l'unité de commande (26) porte à la valeur maximale le degré de blocage du blocage du différentiel intermédiaire (30) lorsqu'en même temps la vitesse de marche déterminée pour le véhicule est nulle, le frein du véhicule actionné, la vitesse de rotation du moteur ($n_{Mot}$) égale à la vitesse de ralenti, la position du papillon des gaz ou de la pédale d'accélérateur (an) égale à la position de marche à vide, aucun rapport ou seulement le premier rapport de la boîte de changement de vitesse (16) du véhicule est engagé et l'embrayage du véhicule est désaccouplé et en ce que l'unité de commande (26) réduit le degré de blocage du blocage du différentiel intermédiaire (30) à la valeur minimale lorsqu'en même temps la vitesse de marche déterminée pour le véhicule est supérieure à zéro, la position du papillon des gaz ou de la pédale d'accélérateur ($\alpha_l$) est différente de la position de marche à vide, la vitesse de rotation du moteur ($n_{Mot}$) est supérieure à la vitesse de ralenti et l'embrayage du véhicule est engagé.